# EUROPÄISCHE PATENTSCHRIFT

(11) **EP 1 229 240 B1**
(45) Veröffentlichungstag und Bekanntmachung des Hinweises auf die Patenterteilung: **23.08.2006**
(21) Anmeldenummer: 02000250.7
(22) Anmeldetag: 14.01.2002
(51) Int. Cl.: F02N 17/04, F02M 31/13

(54) **Kaltstartanordnung für einen PKW-Dieselmotor**
Automotive diesel engine cold starting arrangement
Dispositif de démarrage à froid pour moteur Diesel automobile

(30) Priorität: 05.02.2001 DE 10105331
(43) Veröffentlichungstag der Anmeldung: 07.08.2002
(73) Patentinhaber: Beru AG, 71636 Ludwigsburg (DE)
(72) Erfinder: Stephan, Ulrich, 71636 Ludwigsburg (DE); Geiger, Steffen, 71636 Ludwigsburg (DE)
(74) Vertreter: Wilhelms, Rolf E.

(56) Entgegenhaltungen:
- EP-A- 0 969 199
- WO-A-00/34643
- CH-A- 176 722
- CH-A- 624 184
- DE-A- 3 425 378
- US-A- 4 512 322
- US-A- 4 685 437
- US-A- 5 908 021

## Beschreibung

Die Erfindung betrifft eine Kaltstartanordnung für einen Dieselmotor gemäß Oberbegriff des Anspruchs 1.

Dieselmotoren der gattungsgemäßen Art werden üblicherweise mit Glühkerzen, insbesondere Stabglühkerzen beim Kaltstart im Zünd- und Verbrennungsvorgang unterstützt. Hierbei reicht die in Wärme umgesetzte elektrische Energie häufig für optimales Start- und Warmlaufverhalten bezüglich Laufruhe und Abgaszusammensetzung nicht aus.

Aus der CH 624 184 A ist es bereits bekannt, bei einem Benzinmotor in Verbindung mit einem Luftfilter eine Heizvorrichtung vorzusehen, die im Luftfilteransaugrohr montiert ist, derart, dass die Luft vor dem Eintritt in den Luftfilter erwärmt wird. Hierdurch soll eine Benzineinsparung in der Kaltstartphase erreicht werden.

Aufgabe der Erfindung ist es, eine Kaltstartanordnung zur Verfügung zu stellen, mit deren Hilfe das Kaltstartverhalten und die Warmlaufeigenschaften von PKW-Dieselmotoren im Sinne der heute verlangten Schnellstartsysteme weiter verbessert wird.

Erfindungsgemäß wird diese Aufgabe durch die Kaltstartanordnung gemäß Anspruch 1 gelöst. Weitere vorteilhafte Ausgestaltungen ergeben sich aus den nachfolgenden Ansprüchen 2 bis 11.

Die Erfindung wird anhand der beigefügten beiden Figuren näher erläutert.

Hierbei ist
Figur 1 eine schematische Wiedergabe einer bevorzugten Ausführungsform der Erfindung;
Figur 2 ein Querschnitt durch ein erfindungsgemäßes Heizelement der bevorzugten Anordnung nach Figur 1.

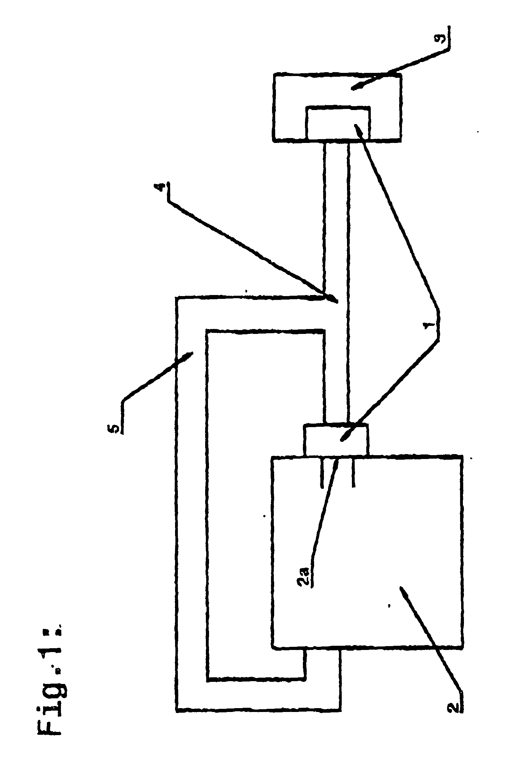

Nach Figur 1 weist diese Ausführungsform der erfindungsgemäßen Kaltstartanordnung einen Motorbrennraum 2 mit einem Brennraumeinlaß 2a, einem Ansaugluftkanal 4, und einem Luftfilter 3 zum Filtern der Ansaugluft sowie einen Abgasrückführungskanal 5 auf. Zwischen Brennraumeinlaß 2a und Einmündung des Abgasrückführungskanals 5 in den Ansaugluftkanal 4 wird in letzterem eine Heizvorrichtung 1 angeordnet; eine solche Heizvorrichtung kann stattdessen auch im Luftfilter 3 vorgesehen sein. Die Heizvorrichtung 1 wird entweder innerhalb des Ansaugluftkanals 4 ausgebildet; bevorzugt wird sie jedoch mit beidseitigen Anschlußstutzen in den Ansaugluftkanal 4 eingefügt, insbesondere zwischen Ansaugluftrohr und Zylinderkopf am Ende des Ansaugluftkanals.

Besonders bevorzugt ist die Ausführungsform, bei der die Heizvorrichtung als Heizflansch ausgebildet ist, der unmittelbar am Brennraumeinlaß 2a des Motors 2 angeflanscht ist. Der Heizflansch weist, wie weiter unten im einzelnen beschrieben, vorzugsweise bandförmige Heizelemente in einem Einbaurahmen auf.

Die Heizvorrichtung 1 wird derart ausgelegt, daß die Ansaugluft im Teillastbereich um etwa 25 bis 50 K aufgeheizt wird; hierfür ist je nach Bauart des Motors eine Heizbelastung bis zu 2 KW erforderlich. Da für den Kaltstart nur die Ansaugluft für einige wenige Umdrehungen aufgeheizt werden muß, kann nach einer verhältnismäßig kurzen Vorheizzeit mit relativ geringer Heizleistung der Startvorgang eingeleitet werden. Die Temperatur der Heizbandoberfläche kann bei ruhender Luft einen Wert im Bereich von etwa 900°C bis 1100°C erreichen; im Teillastbetrieb sinkt die Temperatur üblicherweise auf etwa 500°C bis 600°C ab.

Die Heizvorrichtung wird für eine Dauerbetriebsspannung ausgelegt, die unterhalb der Bordbetriebsspannung liegt, beispielsweise auf 8 V Dauerbetriebsspannung bei einem 12 V Bordnetz. Es wurde gefunden, daß während der Vorheizphase durch die überhöhte Betriebsspannung die Heizvorrichtung keinerlei Schaden nimmt, und während des Motorbetriebs die Temperatur durch die vorbeistreichende kalte Ansaugluft soweit gesenkt wird, daß keine Schädigung wegen der überhöhten Betriebsspannung auftritt. Alternativ hierzu ist denkbar, daß das Heizelement der Heizvorrichtung 1 PTC-Verhalten besitzt oder durch eine externe Ansteuerung gesteuert oder geregelt wird. Bei entsprechender Auslegung der Heizvorrichtung 1 ist eine übliche Stabglühkerze zur Zündung entbehrlich.

Bei Integration der Heizvorrichtung 1 in das Luftfiltergehäuse 3 steht ein größerer Einbauraum zur Verfügung, so daß die Heizelementtemperatur wesentlich niedriger gehalten werden kann, um dieselbe Heizleistung zu erzielen. Hierbei kann beispielsweise als Heizelement der Heizvorrichtung 1 anstelle des Heizbandes auch ein PTC-Heizelement mit Lamellen zur Temperaturübertragung eingesetzt werden.

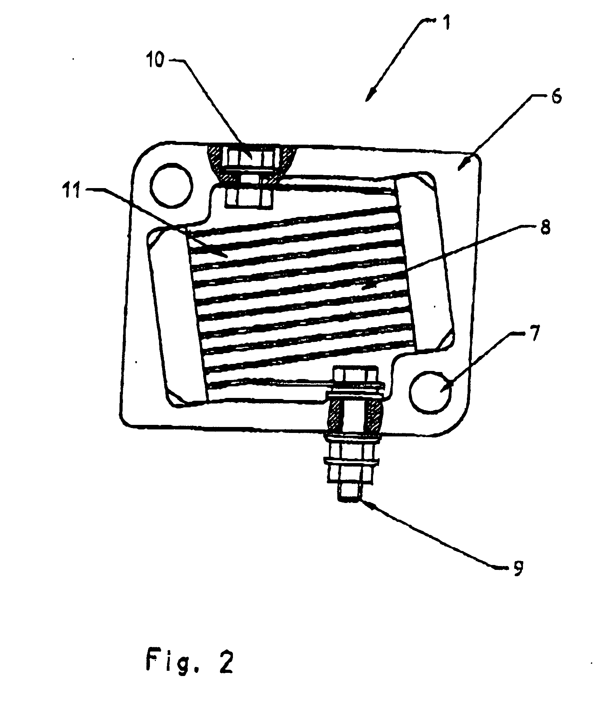

Gemäß Figur 2 weist ein als Heizvorrichtung 1 bevorzugt eingesetzter Heizflansch einen Rahmen 6 mit Befestigungsbohrungen 7 auf. Der Rahmen ist so geformt, daß er am Motoreinlaß 2a angeflanscht und zwischen Ansaugkanal 4 und Brennraumeinlaß 2a eingepaßt werden kann.

Als Heizwiderstand ist ein Heizband 8 vorgesehen, das zum Beispiel meanderförmig im Durchtrittsbereich 11 der Ansaugluft angeordnet wird. Dabei ist das Heizband 8 so ausgeführt, daß über eine möglichst große Oberfläche die Wärmeenergie an die Ansaugluft abgegeben werden kann, während gleichzeitig der Strömungswiderstand möglichst klein gehalten wird. Bevorzugt liegen die Bandbreiten des Heizbandes 8 in der Größenordnung von 10 mm bis 20 mm.

Das Heizband 8 kann beispielsweise durch einen Schraubanschluß 9 mit der Versorgungsspannung kontaktiert werden und liegt am Anschluß 10 auf Masse.

Es kann auch vorgesehen sein, das Heizband 8 durch zwei oder mehrere in Strömungsrichtung hintereinander angeordnete Teilwiderstände aufzuteilen, die je nach Leistungsbedarf gemeinsam oder einzeln betrieben werden. Hierbei können die Heizbänder 8 zueinander gewinkelt angeordnet werden, um die Umlenkung des Luftstroms zur besseren Wärmeübertragung auf die Ansaugluft zu bewirken.

## Patentansprüche

1. Kaltstartanordnung für einen Dieselmotor, der
- einen Brennraum (2) mit Ansauglufteinlass (2a) und Abgasauslass,
- einen Ansaugluftkanal (4), der am Ansauglufteinlass (2a) des Brennraums (2) mündet,
- eine Heizvorrichtung (1) für die Ansaugluft, die im Ansaugluftkanal (4) angeordnet ist, und
- eine Abgasrückführung (5) aufweist, die vom Abgasauslass des Brennraums (2) zu einer Einmündung am Ansaugluftkanal (4) führt,
**dadurch gekennzeichnet dass**,
- die Heizvorrichtung (1) im Ansaugluftkanal (4) zwischen dem Ansauglufteinlass (2a) des Brennraums (2) und der Einmündung der Abgasrückführung (5) angeordnet ist.

2. Kaltstartanordnung für einen Dieselmotor nach Anspruch 1, **dadurch gekennzeichnet, dass** eine Heizeinrichtung (1) im Gehäuse (3) des Luftfilters integriert ist.

3. Kaltstartanordnung nach Anspruch 1 oder 2 **dadurch gekennzeichnet dass**, die Heizvorrichtung (1) als Heizflansch ausgebildet ist.

4. Kaltstartanordnung nach Anspruch 3 **dadurch gekennzeichnet, dass** der Heizflansch an den Ansauglufteinlass (2a) des Brennraums (2) angeflanscht ist.

5. Kaltstartanordnung nach einem der vorhergehenden Ansprüche, **dadurch gekennzeichnet, dass** der Heizflansch einen Rahmen (6) mit Befestigungsbohrungen (7) aufweist, in dem ein Heizwiderstand in Form eines Heizbandes (8) angeordnet ist, das so ausgebildet ist, dass seine Oberfläche zur Abgabe von Heizenergie an die Ansaugluft möglichst groß und sein Strömungswiderstand möglichst klein ist.

6. Kaltstartanordnung nach Anspruch 5 **dadurch gekennzeichnet, dass** die Bandbreite des Heizbandes (8) 10 bis 20 mm beträgt.

7. Kaltstartanordnung nach Anspruch 5 **dadurch gekennzeichnet, dass** das Heizband (8) in in Strömungsrichtung hintereinander angeordnete Teilwiderstände aufgeteilt ist, die je nach Leistungsbedarf gemeinsam oder einzeln betreibbar sind.

8. Kaltstartanordnung nach Anspruch 7 **dadurch gekennzeichnet, dass** die Teilwiderstände zur Umlenkung des sie durchtretenden Luftstroms zueinander gewinkelt angeordnet sind.

9. Kaltstartanordnung nach einem der Ansprüche 3 bis 8 **dadurch gekennzeichnet, dass** der Heizflansch für eine Dauerbetriebsspannung unterhalb der Bordspannung des Kraftfahrzeuges ausgelegt ist, in dem der Dieselmotor angeordnet ist.

10. Kaltstartanordnung nach einem der vorhergehenden Ansprüche, **dadurch gekennzeichnet, dass** der Widerstand der Heizvorrichtung (1) ein PTC-Verhalten aufweist oder extern steuer- oder regelbar ist.

11. Kaltstartanordnung nach einem der vorhergehenden Ansprüche, **dadurch gekennzeichnet, dass** die Heizvorrichtung (1) am oder im Ansauglufteinlass (2a) des Brennraumes (2) angeordnet und so ausgebildet ist, dass die Ansaugluft auf die Entzündungstemperatur des Antriebsgemisches im Brennraum (2) erwärmt wird.

## Claims

1. Cold start arrangement for a diesel engine which has
- a combustion chamber (2) with induction air inlet (2a) and exhaust outlet,
- an induction air duct (4) communicating with the induction air inlet (2a) of the combustion chamber (2),
- a heating apparatus (1) for the induction air, arranged inside the induction air duct (4), and
- an exhaust feedback (5) leading from the exhaust outlet of the combustion chamber (2) to a junction on the induction air duct (4),
**characterized in that**
- the heating apparatus (1) is arranged inside the induction air duct (4) between the induction air inlet (2a) of the combustion chamber (2) and the junction of the exhaust feedback (5).

2. Cold start arrangement for a diesel engine according to Claim 1, **characterized in that** a heating device (1) is incorporated in the housing (3) of the air filter.

3. Cold start arrangement according to Claim 1 or Claim 2 **characterized in that** the heating apparatus (1) is configured as a heater flange.

4. Cold start arrangement according to Claim 3 **characterized in that** the heater flange is flanged to the induction air inlet (2a) of the combustion chamber (2).

5. Cold start arrangement according to any one of the preceding claims, **characterized in that** the heater flange has a frame (6) with fixing holes (7), in which a heating resistor in the form of a heater band (8) is arranged, which is configured so that it it has the largest possible surface area for imparting heat energy to the induction air yet offers the least possible flow resistance.

6. Cold start arrangement according to Claim 5 **characterized in that** the width of the heater band (8) is 10 to 20 mm.

7. Cold start arrangement according to Claim 5 **characterized in that** the heater band (8) is divided up into part-resistors which are disposed in succession in the direction of flow and are operable in combination or separately depending on the power requirement.

8. Cold start arrangement according to Claim 7 **characterized in that** the part-resistors are angled to each other so as to deflect the air flow passing through them.

9. Cold start arrangement according to any one of Claims 3 to 8 **characterized in that** the heater flange is rated for a continuous-duty voltage below the on-board system voltage of the motor vehicle in which the diesel engine is arranged.

10. Cold start arrangement according to any one of the preceding claims, **characterized in that** the resistance of the heating apparatus (1) has a PTC behaviour or is externally controllable or regulatable.

11. Cold start arrangement according to any one of the preceding claims, **characterized in that** the heating apparatus (1) is arranged on or in the induction air inlet (2a) of the combustion chamber (2) and is designed to heat the induction air to the ignition temperature of the propellant mixture in the combustion chamber (2).

## Revendications

1. Dispositif de démarrage à froid pour un moteur diesel qui comporte
- une chambre de combustion (2) avec admission d'air d'aspiration (2a) et échappement des gaz brûlés,
- un canal d'air d'aspiration (4) qui débouche à l'admission d'air d'aspiration (2a) de la chambre de combustion (2),
- un dispositif de chauffage (1) pour l'air d'aspiration, qui est disposé dans le canal d'air d'aspiration (4), et
- un retour des gaz d'échappement (5) qui mène de l'échappement des gaz de la chambre de combustion (2) à une embouchure dans le canal d'air d'aspiration (4),
**caractérisé en ce que**
- le dispositif de chauffage (1) est disposé dans le canal d'air d'aspiration (4) entre l'admission d'air d'aspiration (2a) de la chambre de combustion (2) et l'embouchure du retour des gaz d'échappement (5).

2. Dispositif de démarrage à froid pour un moteur diesel selon la revendication 1, **caractérisé en ce qu'**un dispositif de chauffage (1) est intégré dans le boîtier (3) du filtre à air.

3. Dispositif de démarrage à froid selon la revendication 1 ou 2, **caractérisé en ce que** le dispositif de chauffage (1) est réalisé sous la forme d'une bride chauffante.

4. Dispositif de démarrage à froid selon la revendication 3, **caractérisé en ce que** la bride chauffante est bridée sur l'admission d'air d'aspiration (2a) de la chambre de combustion (2).

5. Dispositif de démarrage à froid selon l'une des revendications précédentes, **caractérisé en ce que** la bride chauffante comporte un cadre (6) avec des perçages de fixation (7), dans lequel une résistance chauffante est disposée sous la forme d'une bande chauffante (8) qui est réalisée de manière que sa surface soit aussi grande que possible pour fournir de l'énergie de chauffage à l'air d'aspiration et sa résistance à l'écoulement aussi petite que possible.

6. Dispositif de démarrage à froid selon la revendication 5, **caractérisé en ce que** la largeur de la bande chauffante (8) est de 10 à 20 mm.

7. Dispositif de démarrage à froid selon la revendication 5, **caractérisé en ce que** la bande chauffante (8) est divisée en résistances partielles disposées les unes derrière les autres dans la direction d'écoulement, qui peuvent fonctionner ensemble ou séparément suivant la puissance nécessaire.

8. Dispositif de démarrage à froid selon la revendication 7, **caractérisé en ce que** les résistances partielles sont disposées coudées les unes par rapport aux autres pour dévier le courant d'air les traversant.

9. Dispositif de démarrage à froid selon l'une des revendications 3 à 8, **caractérisé en ce que** la bride chauffante est dimensionnée pour une tension en service permanent inférieure à la tension de bord du véhicule automobile dans lequel est monté le moteur diesel.

10. Dispositif de démarrage à froid selon l'une des revendications précédentes, **caractérisé en ce que** la résistance du dispositif de chauffage (1) présente un comportement PTC ou peut être commandée ou réglée de manière externe.

11. Dispositif de démarrage à froid selon l'une des revendications précédentes, **caractérisé en ce que** le dispositif de chauffage (1) est disposé sur ou dans l'admission d'air d'aspiration (2a) de la chambre de combustion (2) et est réalisé de manière que l'air d'aspiration soit chauffé à la température d'allumage du mélange propulseur dans la chambre de combustion (2).
